# FASCICULE DE BREVET EUROPEEN

(11) **EP 0 662 666 B1**
(45) Date de publication et mention de la délivrance du brevet: **13.08.1997**
(21) Numéro de dépôt: 94470042.6
(22) Date de dépôt: 23.12.1994
(51) Int. Cl.: G06K 7/08

(54) **Système pour l'identification sans contact d'objets, notamment d'objets métalliques**
Vorrichtung zur kontaktlosen Identifizierung von Objekten, insbesondere von metallischen Objekten
Contactless object identification system, particularly metal objects

(30) Priorité: 11.01.1994 FR 9400398
(43) Date de publication de la demande: 12.07.1995
(73) Titulaire: GEMPLUS CARD INTERNATIONAL, F-13420 Gémenos (FR)
(72) Inventeur: Fallah, Michel CABINET BALLOT SCHMIT, F-57000 METZ (FR); Fidalgo, Jean-Christophe CABINET BALLOT SCHMIT, F-57000 METZ (FR); Foglino, Jean-Jacques CABINET BALLOT SCHMIT, F-57000 METZ (FR); Serra, Didier CABINET BALLOT SCHMIT, F-57000 METZ (FR); Beaufils, Jean-Claude CABINET BALLOT SCHMIT, F-57000 METZ (FR); Van Straaten, Jérôme CABINET BALLOT SCHMIT, F-57000 METZ (FR)
(74) Mandataire: Schmit, Christian Norbert Marie

(56) Documents cités:
- WO-A-93/13494
- GB-A- 2 077 555
- US-A- 3 689 885
- US-A- 4 782 342

## Description

La présente invention concerne un système pour l'identification sans contact d'objets, notamment d'objets métalliques, tels que par exemple des bouteilles de gaz.

Il est connu, pour repérer et identifier de tels objets, d'apposer sur ceux-ci des étiquettes électroniques. Une telle étiquette est munie d'un dispositif de réception et d'émission d'ondes électromagnétiques couplé avec un module électronique permettant de traiter des signaux reçus et d'en réémettre d'autres, comportant notamment un message d'identification de l'étiquette, et donc de l'objet sur lequel elle est apposée. Par ailleurs, le système comporte un lecteur comprenant un dispositif d'émission/réception d'ondes électromagnétiques pour transmettre des informations entre un terminal de données et la dite étiquette électronique.

Le lecteur remplit plusieurs fonctions et notamment sert à
- transmettre à l'étiquette l'énergie nécessaire à son fonctionnement, l'étiquette étant dépourvue de source d'énergie autonome spécifique,
- transmettre à l'étiquette des données provenant du terminal, ces données étant éventuellement inscriptibles dans une mémoire dont l'étiquette est pourvue,
- recevoir des données provenant de l'étiquette et spécifiques à celle-ci, notamment en vue de son identification.

Pour effectuer ces diverses transmissions, le dispositif d'émission-réception du lecteur comporte une antenne par exemple constituée d'une bobine avec un noyau de ferrite, qui sert pour l'émission et pour la réception.

L'étiquette comporte également une antenne de réception des ondes électromagnétiques émises par le lecteur, la même antenne servant également pour l'émission de données vers le lecteur. En réception, l'antenne constitue un moyen de réception par induction de l'énergie provenant du lecteur, ainsi qu'un moyen de réception des données émises par celui-ci. L'antenne est reliée à un circuit électronique, par exemple une "puce" électronique, comportant des moyens nécessaires à la démodulation des signaux reçus par l'antenne, à leur décodage et à leur mémorisation, ainsi qu'au codage et à la modulation de signaux à retransmettre.

Un problème majeur de ces systèmes et de permettre à l'étiquette de recevoir l'énergie nécessaire à son fonctionnement avec un rendement maximum, de manière à pouvoir réduire la puissance du rayonnement électromagnétique émis par le lecteur et à limiter l'encombrement des antennes, et à permettre une transmission de l'énergie et des signaux sans être soumis à une distance de transmission excessivement courte.

Pour tenter de résoudre ce problème, il a déjà été proposé de réaliser une antenne d'étiquette de type pot de ferrite, formée d'une pièce en ferrite de forme cylindrique comportant sur une de ses faces planes une rainure annulaire dans laquelle est logé un bobinage. Une telle antenne est nécessairement fixée sur l'objet à identifier avec son axe perpendiculaire à la surface de l'objet, et du fait de la hauteur relativement importante du pot de ferrite, présente dans la direction axiale un encombrement gênant. Pour y remédier, il est connu d'encastrer l'étiquette à la surface de l'objet. Par exemple, il est connu de placer des étiquettes de ce type dans un logement creusé dans le bouton du robinet de bouteilles de gaz. De ce fait, l'antenne est nécessairement de petites dimensions.

L'antenne du lecteur est réalisée de manière similaire par une bobine dont l'axe doit être placé sensiblement dans la direction de l'axe de l'antenne de l'étiquette pour assurer la meilleure transmission d'énergie possible. Pour augmenter le rendement, la solution qui consisterait à augmenter la dimension diamétrale de l'antenne de l'étiquette pour capter plus de lignes du flux émis par le lecteur est pratiquement irréalisable pour des raisons d'encombrement. Il s'est ainsi avéré que la distance entre lecteur et étiquette ne peut guère excéder 5 mm avec un tel système.

Une autre solution envisagée est de réaliser l'antenne de l'étiquette sous la forme d'un bobinage entourant un bâtonnet de ferrite allongé, par exemple de 15 mm de long pour un diamètre de 3 mm.

Pour que les lignes de flux du champ magnétique passent dans le bâtonnet de ferrite selon la direction axiale du bobinage, celle-ci doit être sensiblement parallèle à la surface de l'objet sur lequel l'étiquette est apposée. Un premier inconvénient de cette disposition est que, pour permettre la transmission d'énergie et de données entre un lecteur de type ci-dessus et l'étiquette, l'antenne du lecteur doit être orientée de manière à avoir son axe dirigé sensiblement selon la direction axiale du bobinage de l'antenne de l'étiquette. Il en résulte une impossibilité de lire l'étiquette de manière sûre sans veiller à l'orientation relative de celle-ci par rapport au lecteur. De plus, il est nécessaire de placer l'étiquette dans un endroit où elle est protégée mécaniquement. Dans le cas de bouteilles de gaz, ceci est réalisé en plaçant l'étiquette à proximité du robinet, à l'intérieur de la tulipe de protection de celui-ci et dans un plan sensiblement perpendiculaire à l'axe de la bouteille. Pour assurer une bonne transmission de l'énergie entre le lecteur et l'antenne de l'étiquette, il faudrait placer l'antenne du lecteur en alignement axial avec celle de l'étiquette, ce qui est pratiquement impossible à l'intérieur de la tulipe pour des raisons d'encombrement, et si le lecteur est placé à l'extérieur de la tulipe, celle-ci forme un écran qui perturbe fortement la transmission.

En conséquence, bien que les étiquettes à antenne de type bâtonnet de ferrite présentent certains avantages, notamment sur le plan de l'encombrement, leur lecture par un lecteur muni d'une antenne classique n'est pas réalisable de manière sûre et aisée lorsqu'elles sont placées sur de nombreux objets, et notamment des bouteilles de gaz.

On connaît également, par le document WO 93/13494, un autre système destiné à l'identification de récipients tels que des bouteilles de gaz, dans lequel l'étiquette est réalisée sous la forme d'un anneau placé au fond de la tulipe de protection autour du robinet de la bouteille et l'antenne de l'étiquette est formée d'un bobinage épousant sensiblement la forme périphérique de l'anneau.

Par ailleurs les documents US-A-4782342 et US-A-3689885 décrivent des systèmes d'identification d'objets, tels que des voitures, ou de personnes, pourvues d'une étiquette électroniques. Les lecteurs utilisés dans de telles applications ne pourraient convenir, de par leur encombrement général, pour l'identification de récipients tels que des bouteilles de gaz pourvue d'une étiquette placée à l'intérieur de la tulipe, celle-ci formant un écran perturbant fortement la transmission de l'énergie entre le lecteur et l'antenne de l'étiquette, parce que les antennes de ces lecteurs ne pourraient pas être placées à proximité d'une telle étiquette.

L'invention a pour but de remédier aux problèmes ci-dessus et de permettre une identification sûre d'objets tels que des récipients fermés par un robinet entouré d'une tulipe de protection, pourvus d'étiquettes électroniques, tout en limitant les contraintes de lecture de ces étiquettes.

Avec ces objectifs en vue, l'invention a pour objet un système d'identification de récipients fermés par un robinet entouré d'une tulipe de protection, ce système comportant un lecteur d'étiquettes et une étiquette électronique placée au fond de la tulipe autour du robinet et munie d'une antenne de réception et d'émission d'ondes électromagnétiques comprenant un bobinage ayant un axe, la dite tulipe formant un écran qui perturbe fortement la transmission de l'énergie entre le lecteur et l'antenne de l'étiquette si le lecteur est placé à l'extérieur de la tulipe, caractérisé en ce que l'axe du bobinage de l'étiquette s'étend sensiblement parallèlement à la surface du fond de la tulipe, et le dit lecteur comporte plusieurs dispositifs d'émission-réception des dites ondes, chaque dispositif d'émission-réception du lecteur comprenant un circuit magnétique et des moyens pour générer dans le dit circuit magnétique un champ magnétique, les dits dispositifs d'émission-réception du lecteur étant décalés angulairement autour d'un axe médian, de manière que, lorsque le lecteur est placé à proximité de la dite étiquette et quelque soit leur orientation relative, au moins une partie des lignes du champ magnétique généré par au moins un des dits dispositifs d'émission-réception puisse se boucler en passant dans le bobinage de l'étiquette selon la direction son axe.

Grâce à l'invention, il est possible de lire de manière fiable une étiquette électronique comportant une antenne du type bâtonnet de ferrite, notamment placée parallèlement contre ou à proximité de la surface d'un objet, sans qu'il soit nécessaire de rechercher une orientation particulière du lecteur par rapport à l'étiquette.

Il devient ainsi possible de lire l'étiquette de manière sûre, quelle que soit son orientation. En effet, si, lors de la lecture, l'antenne de l'étiquette se trouve par hasard orientée perpendiculairement à la direction du champ, définie par l'un des dispositifs d'émission-réception, ce qui empêcherait la transmission du flux à travers le bobinage, cette transmission pourra cependant être réalisée par un autre de ces dispositifs, puisque celui-ci, décalé angulairement, pourra transmettre au moins partiellement le flux à travers le dit bobinage de l'étiquette.

Préférentiellement, le système, dans lequel le lecteur est associé avec un terminal de données, comporte des moyens de sélection automatique pour commuter automatiquement l'alimentation d'un premier quelconque de ces dispositifs vers un deuxième quelconque de ces dispositifs lorsque les données reçues par le terminal en provenance du dit premier dispositif sont considérées non valides.

Selon une disposition particulière, le circuit magnétique de chaque dispositif d'émission-réception comprend deux barreaux dont les extrémités respectives constituent deux pôles espacés l'un de l'autre d'une distance telle que au moins une partie des lignes du champ magnétique puisse se boucler dans le circuit magnétique en passant dans le bobinage de l'étiquette, et les moyens pour générer le champ magnétique comprennent deux bobines enroulées respectivement sur les deux barreaux.

Cette disposition présente l'avantage que les deux bobines étant bobinées de manière à créer un flux magnétique de l'une vers l'autre en passant par la bobine de l'étiquette, la puissance transmise et la sensibilité de réception sont pratiquement doublées.

Préférentiellement alors, les axes des barreaux sont sensiblement parallèles, et les dites extrémités des barreaux sont situées sensiblement dans un même plan perpendiculaire aux dits axes.

Cette disposition présente l'avantage de fournir un lecteur de faible encombrement que l'on peut amener facilement à proximité de l'étiquette pour en faire la lecture, sensiblement perpendiculairement à celle-ci, en particulier même lorsque des moyens de protection entourent l'étiquette, comme cela est le cas par exemple pour des bouteilles de gaz.

L'invention a aussi pour objet une étiquette électronique pour un système d'identification d'objet muni d'une telle étiquette, comportant un module électronique couplé avec une antenne de réception et d'émission d'ondes électromagnétiques, la dite antenne comprenant un bobinage ayant un axe et enroulé autour d'un bâtonnet de ferrite allongé dans la direction de cet axe, caractérisée en ce qu'elle comporte une feuille en alliage métallique amagnétique et conducteur de l'électricité et la dite antenne s'étend à proximité directe de la dite feuille, l'axe du bobinage étant parallèle à celle-ci. L'étiquette selon l'invention est particulièrement adaptée pour le système mentionné ci-dessus. En effet, lors de la lecture d'une étiquette comportant une antenne formé par un bobinage enroulé autour d'un bâtonnet de ferrite située parallèlement à la surface de l'objet, le flux magnétique émis par le lecteur passe en partie à côté de l'antenne, en formant un flux de fuite, malgré le pouvoir concentrateur de flux du bâtonnet de ferrite. En fonction de la nature du matériau de l'objet, ce flux de fuite peut être modifié de manière importante, perturbant en conséquence le flux passant dans le bâtonnet de ferrite. Ainsi par exemple, si l'objet est en matériau magnétique, par exemple en acier, une partie importante du flux émis va passer dans ce matériau, au détriment de la part de flux traversant la ferrite de l'étiquette. A l'inverse, si le matériau de l'objet est non magnétique, il agit comme un réflecteur pour le champ magnétique, les lignes de champ réfléchies venant perturber le champ émis, à proximité de l'antenne, en risquant même de créer par interférences des noeuds de champ, où celui-ci s'annule. En conséquence, l'énergie reçue par l'étiquette, et le comportement général de celle-ci, sont variables en fonction du matériau constitutif de l'objet, ce qui provoque des variations de conditions de lecture, et notamment de la distance acceptable entre le lecteur et l'étiquette.

L'étiquette selon l'invention permet de remédier à ce problème en rendant le comportement de l'étiquette indépendant de la nature du support sur lequel elle est apposée, la feuille du matériau conducteur non magnétique jouant le rôle d'un écran agissant toujours de la même manière quel que soit le matériau sous-jacent.

D'autres caractéristiques et avantages de l'invention apparaîtront dans la description qui va être faite, à titre d'exemple, d'un système d'identification de bouteille de gaz et d'une étiquette pour de telles bouteilles, conformément à l'invention.

On se reportera aux dessins annexés dans lesquels :
- la figure 1 représente schématiquement le lecteur lors de la lecture d'une étiquette apposée sur une bouteille de gaz,
- la figure 2 est une vue de dessus de l'étiquette,
- la figure 3 est une vue en section selon la ligne III-III de la figure 2,
- la figure 4 montre le schéma de principe d'une disposition particulière des bobines du lecteur, dans le cas d'un lecteur comportant deux dispositifs d'émission-réception,
- la figure 5 est un schéma électrique du lecteur dans le cas où il comporte plusieurs dispositifs d'émission-réception commutables.

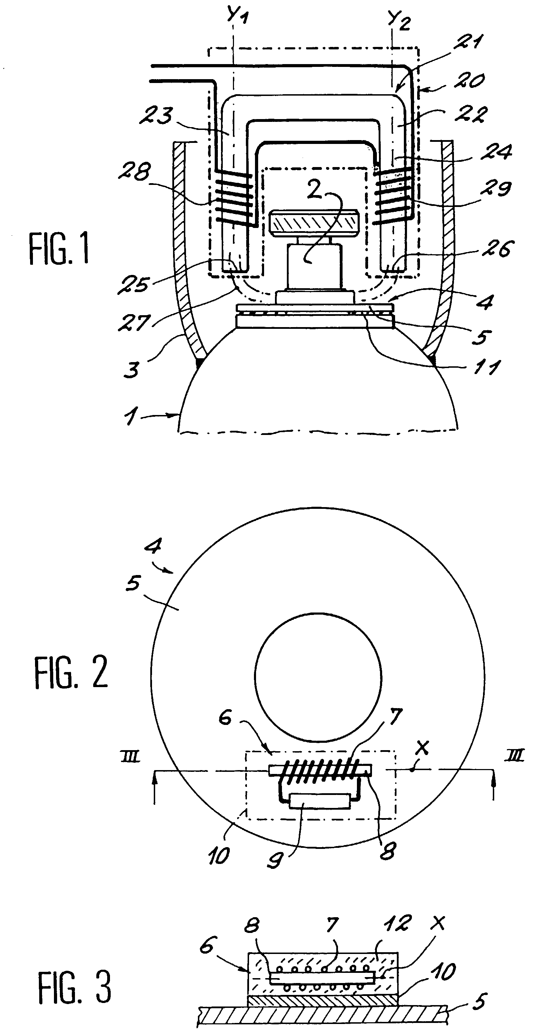

Sur le dessin de la figure 1, on a représenté la partie supérieure d'une bouteille de gaz 1 comportant un robinet 2 et une tulipe de protection 3 entourant le robinet.

Une étiquette électronique 4 est placée au fond de la tulipe, contre la paroi 11 de la bouteille 1.

Comme on le voit mieux aux figures 2 et 3, l'étiquette 4 comprend un anneau plat 5 en matière plastique fixé sur la bouteille et entourant le raccord du robinet 2. L'étiquette comprend aussi une antenne 6 de réception et d'émission d'ondes électromagnétiques formée d'une bobine 7 enroulée autour d'un bâtonnet de ferrite 8 s'étendant selon un axe X, et couplée avec un module électronique 9, tel qu'une puce de circuit intégré, de type connu pour assurer l'identification de l'étiquette. L'antenne s'étend, selon la direction axiale X du bâtonnet, parallèlement à la surface de l'anneau 5 et donc sensiblement parallèlement à la surface de la paroi 11 de la bouteille, et selon une direction tangentielle par rapport au dit anneau. Une feuille 10 en matériau amagnétique et de faible résistivité électrique est interposée entre l'antenne 6 et l'anneau 5.

L'ensemble de l'antenne 6, et éventuellement de la feuille 10, est préférentiellement enveloppé par, ou enrobé dans, un matériau isolant 12, par exemple une matière plastique, pour former une protection de l'antenne.

La feuille 10 est par exemple en cuivre ou alliage de cuivre, et s'étend préférentiellement au delà des extrémités du bâtonnet de ferrite 8. Ainsi qu'on le comprendra mieux dans la suite de la description, cette feuille a pour rôle de former un écran réflecteur pour les ondes radiofréquences véhiculées par le flux magnétique généré par le lecteur lors de la lecture de l'étiquette ou de l'écriture dans celle-ci. Il est souhaitable de réduire cette épaisseur le plus possible pour limiter l'encombrement de l'étiquette. Cependant, l'épaisseur devra être au moins égale à l'épaisseur de peau du matériau amagnétique à la fréquence considérée afin que l'effet de cette couche métallique soit significatif. L'épaisseur de peau est définie comme l'épaisseur de métal assurant la conduction électrique à une fréquence donnée. La feuille pourra en particulier être réalisée par une métallisation de l'anneau ou, dans d'autres applications, du support de l'antenne, réalisée par un procédé, de type connu, de dépôt sous vide du dit alliage métallique amagnétique, ou par toute autre technique de dépôt telle qu'un dépôt électrolytique, un dépôt chimique ou par contrecollage d'une feuille métallique.

Sur le dessin de la figure 1, on a également représenté un dispositif 21 d'émission-réception d'ondes électromagnétiques d'un lecteur 20, représenté schématiquement et dont la forme est adaptée pour pénétrer à l'intérieur de la tulipe 3 de protection. Le dispositif d'émission-réception comprend des moyens pour générer un champ magnétique dans un circuit magnétique, formé d'une pièce 22 en matériau magnétique, par exemple en forme de U, comportant deux barreaux formant les branches 23, 24 du "U" dont les extrémités forment deux pôles 25, 26 ayant des directions axiales Y1, Y2 sensiblement parallèles et situés dans un même plan sensiblement perpendiculaire aux dites directions axiales. Les deux pôles 25, 26 sont espacés d'une distance telle que les lignes 27 du champ magnétique passant dans le circuit magnétique bouclent en passant dans le bâtonnet de ferrite 8 lorsque le lecteur est approché de l'étiquette. Le bâtonnet de ferrite va ainsi participer à la fermeture du circuit magnétique, et en ayant un effet de concentration des lignes de champ, optimiser le flux traversant la bobine 7 de l'étiquette.

Les dits moyens de génération du champ magnétique sont préférentiellement constitués de deux bobines 28, 29, enroulées autour des branches 23, 24 et dans un sens adapté pour que le flux tourne dans le circuit magnétique, c'est-à-dire tel que le champ généré par chacune des bobines dans les branches respectives soit de sens contraire.

Lors de la lecture d'une étiquette, en plaçant le lecteur à proximité de celle-ci, les lignes de champs tendent à être canalisées pour le bâtonnet de ferrite 8. Cependant, une partie de ces lignes se disperse et il existe donc un flux de fuite qui est perdu, ce phénomène pouvant être d'autant plus accentué, avec le lecteur selon l'invention, que la disposition des pôles tend à provoquer un épanouissement des lignes de champ entre ceux-ci.

La densité de ce flux de fuite est variable d'une part en fonction de la position relative du lecteur et de l'étiquette, et d'autre part de la nature des matériaux avoisinants. Ainsi par exemple, à proximité d'une masse métallique magnétique telle que celle d'une bouteille en acier, le flux de fuite drainé à travers cette masse et consommé par la magnétisation de celle-ci, sera important et réduira d'autant le flux utile traversant la bobine du récepteur. Par contre, si la masse métallique est amagnétique, par exemple une bouteille en aluminium, le champ magnétique est réfléchi.

C'est pourquoi l'étiquette selon l'invention comporte la feuille de métal conducteur non magnétique qui fait écran et réfléchit le champ, et homogénéise donc les conditions d'émission et de réception quel que soit la nature du matériau de l'objet sur lequel l'étiquette est apposée.

On a ainsi constaté qu'en l'absence de la feuille 10, la fréquence d'accord du circuit résonant formant l'antenne, constitué du bobinage 7 et d'une capacité d'accord, pouvait varier de plus de 10 % en approchant l'antenne d'une surface en matériau amagnétique, alors que avec l'étiquette selon l'invention, cette variation est seulement de l'ordre de 1 %.

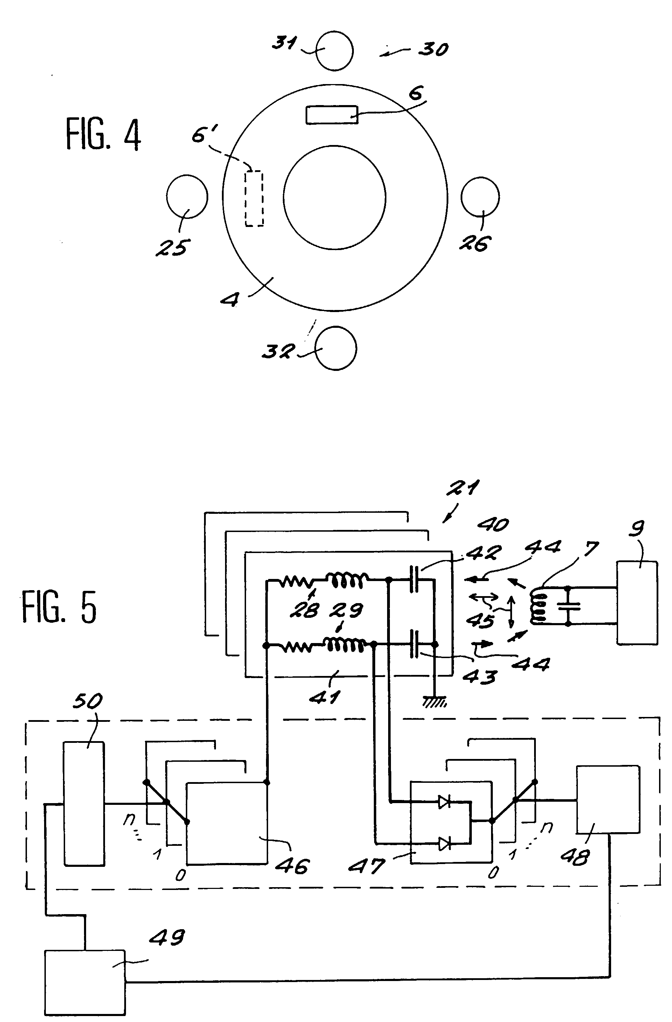

Si le lecteur ne comportait qu'un seul dispositif d'émission-réception, il se pourrait que, lors de la lecture, l'orientation relative des pôles 25, 26 et de l'antenne 6 de l'étiquette soit telle que le flux traversant la bobine 7 de l'étiquette soit insuffisant, par exemple lorsque, comme représenté en pointillé 6' à la figure 4, la direction axiale X de la dite antenne est perpendiculaire au plan contenant les dits pôles. Il serait alors nécessaire de changer cette orientation pour permettre la lecture. Pour éviter ce problème, le lecteur comporte un deuxième dispositif d'émission-réception 30, constitué comme celui 21 représenté sur la figure 1, et décalé angulairement par rapport au premier autour de l'axe médian A des pôles, de manière que le plan des pôles 31, 32 du deuxième dispositif soit, par exemple et non limitativement, perpendiculaire à celui du premier. Ainsi, quelle que soit la position relative du lecteur et de l'antenne, la lecture peut être effectuée, par au moins l'un des dispositifs.

On comprendra aisément que la lecture pourra être encore plus sûre en toute position en utilisant plus de deux dispositifs d'émission-réception, répartis selon différentes positions angulaires de manière à couvrir les différentes orientations que peut prendre l'antenne de l'étiquette.

Le dessin de la figure 5 montre un schéma bloc simplifié du lecteur comportant une telle pluralité de dispositifs d'émission-réception et des moyens de sélection automatique, parmi ces dispositifs, de celui permettant une lecture fiable de l'étiquette.

Sur ce schéma, on a représenté plusieurs dispositifs d'émission-réception 21, repérés de 0,1.... n, chacun comportant deux circuits résonnants 40, 41 montés en parallèle, et comportant respectivement les bobines 28, 29 associées avec des condensateurs 42, 43. Les flèches en gras 44 représentent symboliquement la transmission de l'énergie nécessaire au fonctionnement de l'étiquette électronique ; les flèches doubles 45 représentent de même les échanges de données entre le lecteur et l'étiquette, par modulation des ondes électromagnétiques transmises.

Chaque dispositif 21 d'émission-réception est relié à un étage de puissance et de modulation 46 et à un étage de démodulation 47. Les sorties des étages de démodulation 47 sont reliées ensemble à des filtres 48, d'où les signaux correspondants aux données lues sont transmis à un terminal de données 49.

Les entrées des étages de puissance et de modulation 44 sont reliées à un sélecteur 50 qui les alimente sélectivement, lui-même relié au terminal 49. Lorsque, au cours d'une lecture, les données transmises au terminal et provenant des signaux captés par l'un des dispositifs 21, ne sont pas valides, notamment parce que l'antenne de l'étiquette ne se trouve pas correctement orientée par rapport au dit dispositif 21, le terminal envoie une impulsion au sélecteur 50 qui commute alors pour alimenter un autre étage de puissance et de modulation et donc mettre en service un autre dispositif d'émission-réception. Ces opérations se renouvellent jusqu'à ce que la lecture de l'étiquette soit validée.

L'invention n'est pas limitée aux dispositions décrites ci-dessus uniquement à titre d'exemple. En particulier, l'étiquette peut être réalisée sous une forme différente de la forme annulaire précédemment décrite et comporter à la place de l'anneau 5 une simple plaque, par exemple en matière plastique, formant une couche de matériau isolant placée contre la feuille en matériau conducteur amagnétique, de son côté opposé à l'antenne. Cette plaque sert de support pour l'antenne et le module électronique. Cette plaque peut en particulier, tout en conservant une forme générale annulaire, être discontinue, par exemple en forme de "C", ce qui peut faciliter sa mise en place sur la bouteille autour du robinet. Elle peut aussi présenter toute autre forme adaptée à l'objet sur lequel l'étiquette doit être apposée. L'étiquette peut être apposée sur tout objet, la dite plaque permettant de plus d'isoler électriquement la feuille de matériau conducteur amagnétique du dit objet, notamment lorsque celui-ci est métallique.

Également, le circuit magnétique de chaque dispositif d'émission-réception peut être conformé de manière différente de ce qui a été décrit ci-dessus uniquement à titre d'exemple. En particulier, les axes des barreaux pourraient ne pas être parallèles, par exemple inclinés l'un par rapport à l'autre, ou même sensiblement coaxiaux, avec les faces d'extrémité des barreaux dirigées l'une vers l'autre, dans le cas où ne se poseraient pas de problèmes d'encombrement au voisinage des étiquettes. Les dites faces des barreaux pourraient aussi, même dans le cas de barreaux parallèles, ne pas être coplanaires mais inclinées l'une par rapport à l'autre.

## Revendications

1. Système d'identification de récipients (1) fermés par un robinet (2) entouré d'une tulipe (3) de protection, ce système comportant un lecteur (20) d'étiquettes et une étiquette électronique (4) placée au fond de la tulipe autour du robinet et munie d'une antenne (6) de réception et d'émission d'ondes électromagnétiques comprenant un bobinage (7) ayant un axe (X), la dite tulipe formant un écran qui perturbe fortement la transmission de l'énergie entre le lecteur et l'antenne de l'étiquette si le lecteur est placé à l'extérieur de la tulipe, caractérisé en ce que l'axe (X) du bobinage de l'étiquette s'étend sensiblement parallèlement à la surface du fond de la tulipe, et le dit lecteur comporte plusieurs dispositifs (21, 30) d'émission-réception des dites ondes, chaque dispositif d'émission-réception du lecteur comprenant un circuit magnétique (22) et des moyens (28, 29) pour générer dans le dit circuit magnétique (22) un champ magnétique, les dits dispositifs d'émission-réception du lecteur étant décalés angulairement autour d'un axe médian, de manière que, lorsque le lecteur est placé à proximité de la dite étiquette et quelque soit leur orientation relative, au moins une partie des lignes (27) du champ magnétique généré par au moins un des dits dispositifs (21, 30) d'émission-réception puisse se boucler en passant dans le bobinage (7) de l'étiquette selon la direction de son axe (X).

2. Système selon la revendication 1, caractérisé en ce que le circuit magnétique (22) de chaque dispositif d'émission-réception comprend deux barreaux (23, 24) dont les extrémités respectives (25, 26) constituent deux pôles espacés l'un de l'autre d'une distance telle que au moins une partie des lignes (27) du champ magnétique puisse se boucler dans le circuit magnétique en passant dans le bobinage (7) de l'étiquette, et les moyens pour générer le champ magnétique comprennent deux bobines (28, 29) enroulées respectivement sur les deux barreaux dans une configuration telle que le champ généré soit de sens opposé dans les deux barreaux.

3. Système selon la revendication 2, caractérisé en ce que les barreaux (23, 24) ont des axes (Y1, Y2) sensiblement parallèles, et les dites extrémités (25, 26) des barreaux sont situées sensiblement dans un même plan perpendiculaire aux dits axes.

4. Système selon la revendication 1, caractérisé en ce qu'il comporte un terminal (49) de données associé avec le lecteur et des moyens (50) de sélection automatique pour commuter automatiquement l'alimentation d'un premier (21) quelconque de ces dispositifs vers un deuxième (30) quelconque de ces dispositifs lorsque les données reçues par le terminal (49) en provenance du dit premier dispositif sont considérées non valides.

5. Etiquette électronique pour un système d'identification d'objet muni d'une telle étiquette, comportant un module électronique (9) couplé avec une antenne (6) de réception et d'émission d'ondes électromagnétiques, la dite antenne comprenant un bobinage (7) ayant un axe (X) et enroulé autour d'un bâtonnet (8) de ferrite allongé dans la direction de cet axe, caractérisée en ce qu'elle comporte une feuille (10) en alliage métallique amagnétique et conducteur de l'électricité et la dite antenne s'étend à proximité directe de la dite feuille, l'axe du bobinage étant parallèle à celle-ci.

6. Etiquette selon la revendication 5, caractérisée en ce que la dite feuille (10) est en alliage de cuivre.

7. Etiquette selon l'une des revendications 5 ou 6, caractérisée en ce qu'elle comporte une couche (5) de matériau isolant, placée contre la dite feuille, sur sa faxe opposée à l'antenne.

8. Etiquette selon la revendication 7, caractérisée en ce que la dite feuille est réalisée par une métallisation, par dépôt sous vide du dit alliage, de la surface de la couche (5) de matériau isolant.

9. Etiquette selon la revendication 7, caractérisée en ce que la couche (5) de matériau isolant est constituée par une plaque en matière plastique.

10. Système selon l'une des revendications 1 à 4, caractérisé en ce que l'étiquette (4) comprend une couche (5) de matériau isolant, placée au fond de la tulipe autour du robinet, un module électronique (9) associé à l'antenne (6) comportant un bobinage (7) enroulé sur un bâtonnet (8) de ferrite, l'antenne (6) étant fixée sur la couche (5) de matériau isolant, parallèlement à la surface de ce dernier, et une feuille (10) en matériau métallique amagnétique fixée sur la couche (5) de matériau isolant et interposée entre l'antenne et la surface (11) du récipient.

11. Système selon la revendication 10, caractérisé en ce que la feuille (10) en matériau métallique amagnétique est interposée entre l'antenne (6) et la couche (5) de matériau isolant.

12. Système selon la revendication 10, caractérisée en ce que la couche (5) de matériau isolant est formée par un anneau plat en matière plastique.

## Claims

1. System for identifying receptacles (1) closed off by a valve (2) surrounded by a protective bell (3), this system having a label reader (20) and an electronic label (4) positioned at the bottom of the bell around the valve and provided with an antenna (6) for receiving and transmitting electromagnetic waves comprising a winding (7) with an axis (X), the said bell forming a screen which strongly disturbs the transmission of energy between the reader and the antenna of the label if the reader is positioned outside the bell, characterised in that the axis (X) of the winding of the label extends substantially parallel to the surface of the base of the bell, and the said reader has several devices (21, 30) for transmitting/receiving the said waves, each transmission/reception device of the reader comprising a magnetic circuit (22) and means (28, 29) for generating a magnetic field in the said magnetic circuit (22), the said transmission/reception devices of the reader being angularly offset about a median axis so that, when the reader is placed in the vicinity of the said label and whatever their relative orientation, at least part of the lines (27) of the magnetic field generated by at least one of the said transmission/reception devices (21, 30) can loop back, passing through the winding (7) of the label in the direction of its axis (X).

2. System according to Claim 1, characterised in that the magnetic circuit (22) of each transmission/reception device comprises two bars (23, 24) whose respective ends (25, 26) form two poles spaced apart from each other by a distance such that at least part of the lines (27) of the magnetic field can loop back in the magnetic circuit, passing through the winding (7) of the label, and the means for generating the magnetic field comprise two windings (28, 29) wound respectively on the two bars in a configuration such that the field generated is in opposite directions in the two bars.

3. System according to Claim 2, characterised in that the bars (23, 24) have axes (Y1, Y2) which are substantially parallel, and the said ends (25, 26) of the bars are situated substantially in the same plane perpendicular to the said axes.

4. System according to Claim 1, characterised in that it has a data terminal (49) associated with the reader and automatic selection means (50) for automatically switching the supply from any first one (21) of these devices to any second one (30) of these devices when the data received by the terminal (49) coming from the said first device are considered invalid.

5. Electronic label for a system for identifying an object provided with such a label, having an electronic module (9) coupled with an antenna (6) for receiving and transmitting electromagnetic waves, the said antenna comprising a winding (7) having an axis (X), and wound around a ferrite rod (8) elongate in the direction of this axis, characterised in that it has a sheet (10) of non-magnetic and electrically conductive metal alloy and the said antenna extends in direct proximity to the said sheet, the axis of the winding being parallel thereto.

6. Label according to Claim 5, characterised in that the said sheet (10) is made of copper alloy.

7. Label according to one of Claims 5 or 6, characterised in that it has a layer (5) of isolating material, positioned against the said sheet, on its face opposite the antenna.

8. Label according to Claim 7, characterised in that the said sheet is produced by the metallization, by vacuum deposition of the said alloy, of the surface of the layer (5) of isolating material.

9. Label according to Claim 7, characterised in that the layer (5) of isolating material consists of a plate of plastic material.

10. System according to one of Claims 1 to 4, characterised in that the label (4) comprises a layer (5) of isolating material, positioned at the bottom of the bell around the valve, an electronic module (9) associated with the antenna (6) having a winding (7) wound on a ferrite rod (8), the antenna (6) being fixed on the layer (5) of isolating material, parallel to the surface thereof, and a sheet (10) of non-magnetic metallic material fixed on the layer (5) of isolating material and interposed between the antenna and the surface (11) of the receptacle.

11. System according to Claim 10, characterised in that the sheet (10) of non-magnetic metallic material is interposed between the antenna (6) and the layer (5) of isolating material.

12. System according to Claim 10, characterised in that the layer (5) of isolating material is formed by a flat plastic ring.

## Patentansprüche

1. System zur Identifizierung von Rezipienten (1), die durch einen Hahn (2) verschlossen sind, der von einer Schutzglocke (3) umgeben ist, wobei dieses System ein Lesegerät (20) für Etiketten und ein elektronisches Etikett (4) auf dem Boden der Glocke um den Hahn herum und mit einer Antenne (6) zum Empfang und zum Aussenden von elektromagnetischen Wellen umfaßt, die eine Spule (7) mit einer Achse (X) umfaßt, wobei die Glocke einen Schirm darstellt, der die Übertragung von Energie zwischen dem Lesegerät und der Antenne des Etikettes stark stört, wenn das Lesegerät sich außerhalb der Glocke befindet,
dadurch gekennzeichnet, daß
die Achse (X) der Spule des Etiketts sich im wesentlichen parallel zur Oberfläche des Bodens der Glocke erstreckt und das Lesegerät mehrere Sende-Empfangs-Vorrichtungen (21, 30) für die genannten Wellen umfaßt, wobei jede Sende-Empfangs-Vorrichtung des Lesegerätes einen Magnetkreis (22) und Vorrichtungen (28, 29) umfaßt, um in dem Magnetkreis (22) ein Magnetfeld zu erzeugen, wobei die Sende-Empfangs-Vorrichtungen des Lesegerätes winkelmäßig um eine Mittelachse derartig versetzt sind, daß sich beim Annähern des Lesegerätes an das Etikett unabhängig von dessen relativer Orientierung wenigstens ein Teil der Magnetfeldlinien (27), die durch wenigstens eine der Sende-Empfangs-Vorrichtungen (21, 30) erzeugt wurden, schließen kann, indem sie durch die Spule (7) des Etiketts entlang ihrer Achse (X) verlaufen.

2. System nach Anspruch 1, dadurch gekennzeichnet, daß der Magnetkreis (22) jeder Sende-Empfangs-Vorrichtung zwei Streben (23, 24) umfaßt, deren jeweilige Enden (25, 26) zwei Pole bilden, die voneinander derart besabstandet sind, daß sich wenigstens ein Teil der Magnetfeldlinien (27) in dem Magnetkreis schließen kann, indem sie durch die Spule (7) des Etiketts verlaufen, und die Mittel zum Erzeugen des Magnetfeldes zwei Spulen (28, 29) umfassen, die jeweils um die beiden Streben in einer Konfiguration gewickelt sind, daß das erzeugte Feld in den beiden Streben eine entgegengesetzte Richtung hat.

3. System nach Anspruch 2, dadurch gekennzeichnet, daß die Streben (23, 24) im wesentlichen parallele Achsen (Y1, Y2) haben und die Enden (25, 26) der Streben sich im wesentlichen in derselben Ebene, die senkrecht zu den Achsen steht, befinden.

4. System nach Anspruch 1, dadurch gekennzeichnet, daß es einen Datenanschluß (49) umfaßt, der mit dem Lesegerät zusammenhängt, und Mittel (50) zum automatischen Auswählen, um automatisch die Versorgung irgendeiner ersten (21) dieser Vorrichtungen zu irgendeiner zweiten (30) dieser Vorrichtungen umzuschalten, wenn die von dem Anschluß (49) über die erste Vorrichtung empfangenen Daten ungültig sind.

5. Elektronisches Etikett für ein System zum Identifizieren eines Objektes mit einem solchen Etikett, das ein Elektronikmodul (9) umfaßt, das mit einer Antenne (6) zum Empfangen und Aussenden von elektromagnetischen Wellen gekoppelt ist, wobei die Antenne eine Spule (7) umfaßt, die eine Achse (X) aufweist und um einen Ferritstab (8) gewickelt ist, der in Richtung dieser Achse verlängert ist, dadurch gekennzeichnet, daß es ein Blatt (10) aus einer metallischen amagnetischen und elektrisch leitfähigen Legierung umfaßt und sich die Antenne in unmittelbarer Nähe des Blattes erstreckt, wobei die Achse der Spule parallel zu diesem verläuft.

6. Etikett nach Anspruch 5, dadurch gekennzeichnet, daß das Blatt (10) eine Kupferlegierung ist.

7. Etikett nach einem der Ansprüche 5 oder 6, dadurch gekennzeichnet, daß es eine Schicht (5) aus Isoliermaterial umfaßt, die an dem Blatt auf dessen der Antenne gegenüberliegenden Seite anliegt.

8. Etikett nach Anspruch 7, dadurch gekennzeichnet, daß das Blatt hergestellt wird als eine Metallschicht, die als Legierung im Vakuum auf der Oberfläche der Schicht aus Isoliermaterial abgeschieden wird.

9. Etikett nach Anspruch 7, dadurch gekennzeichnet, daß die Schicht (5) aus Isoliermaterial aus einer Platte aus Plastik besteht.

10. System nach einem der Ansprüche 1 bis 4, dadurch gekennzeichnet, daß das Etikett (4) eine Schicht (5) aus Isoliermaterial, die sich auf dem Boden der Glocke um den Hahn herum befindet, ein Elektronikmodul (9), das mit der Antenne (6) zusammenhängt, die eine Spule (7) umfaßt, die um einen Ferritstab (8) herumgewickelt ist, wobei die Antenne (6) auf der Schicht (5) aus Isoliermaterial parallel zur Oberfläche der letzteren befestigt ist, und ein Blatt (10) aus amagnetischem metallischem Material, das auf der Schicht (5) aus Isoliermaterial zwischen der Antenne und der Oberfläche (11) des Rezipienten befestigt ist, umfaßt.

11. System nach Anspruch 10, dadurch gekennzeichnet, daß das Blatt (10) aus amagnetischem metallischem Material sich zwischen Antenne (6) und der Schicht (5) aus Isoliermaterial befindet.

12. System nach Anspruch 10, dadurch gekennzeichnet, daß die Schicht (5) aus Isoliermaterial ein flacher Ring aus Plastikmaterial ist.
